# FASCICULE DE BREVET EUROPEEN

(11) **EP 4 304 901 B1**
(45) Date de publication et mention de la délivrance du brevet: **26.03.2025**
(21) Numéro de dépôt: 22708584.2
(22) Date de dépôt: 01.02.2022
(51) Int. Cl.: B60R 16/04, B60K 1/04, B60K 6/22, B62D 29/04, H01M 50/20

(54) **DISPOSITIF DE SUPPORT DU CHARGEUR DE BATTERIE DES VEHICULES AUTOMOBILES**
VORRICHTUNG ZUR ABSTÜTZUNG EINES KRAFTFAHRZEUGBATTERIELADEGERÄTS
DEVICE FOR SUPPORTING A MOTOR VEHICLE BATTERY CHARGER

(30) Priorité: 12.03.2021 FR 2102479
(43) Date de publication de la demande: 17.01.2024
(73) Titulaire: Stellantis Auto SAS, 78300 Poissy (FR)
(72) Inventeur: BOURIOT, Frank, 25550 Allondans (FR); VERDIER, Laurent, 90000 Belfort (FR)
(74) Mandataire: PSIP
(86) Numéro de dépôt international: PCT/FR2022/050173
(87) Numéro de publication internationale: WO 2022/189715

(56) Documents cités:
- EP-A1- 1 479 567
- EP-A1- 3 783 688
- EP-B1- 1 479 567
- EP-B1- 2 767 428
- WO-A2-2011/134824
- FR-A1- 3 049 920
- FR-A1- 3 079 783
- FR-A1- 3 086 331
- US-A1- 2020 070 670

## Description

La présente invention revendique la priorité de la demande française N°2102479 déposée le 12.03.2021 dont le contenu (texte, dessins et revendications) est ici incorporé par référence.

L'invention s'applique au montage du chargeur de batterie sur la caisse des véhicules automobiles.

Plus précisément, l'invention concerne un dispositif perfectionné destiné à assurer l'interface entre, respectivement, le chargeur de batterie, son support et la caisse du véhicule.

Le chargeur de batterie équipant les véhicules automobiles est un composant relativement lourd (une dizaine de kilos) et encombrant qui est logé dans un support fixé sous la caisse du véhicule. Ce support est généralement formé d'un berceau dans lequel est posé le chargeur et qui est pourvu de pattes verticales assurant la liaison avec la caisse.

Avec les vibrations de la caisse et du fait de l'inertie du chargeur, le support est soumis à des mouvements de balancier. Or, ces sollicitations finissent par entraîner des déformations qui sont susceptibles de provoquer la rupture du support et la chute du chargeur. Par conséquent, les interfaces de support disponibles actuellement ne permettent pas d'avoir une bonne tenue en endurance.

Le brevet EP1479567B1 décrit un support destiné à recevoir un équipement électrique à haute tension et à le fixer en suspension sur la structure d'un véhicule automobile. Ce support est évidé pour permettre l'aération de l'équipement à haute tension.

Le brevet EP2767428B1 décrit un support de chargeur suspendu, pourvu d'un élément de renfort et d'un élément de guidage et permettant de rigidifier l'ensemble constitué du support et du chargeur en position de montage sur la caisse d'un véhicule.

Cependant, aucun de ces documents antérieurs ne divulgue une solution technique permettant d'assurer, à la fois, une rigidification et un calage du support de chargeur sans augmenter l'encombrement et sans faire appel à un élément complémentaire, et un montage du chargeur dans une position située au plus proche de la caisse ou tout au moins à proximité immédiate de la « Platine d'Outillage Mécanique » (dite POM) destinée au montage des divers composants sur le châssis du véhicule.

Dans ce contexte, l'invention vise à surmonter les problèmes techniques soulevés par les solutions antérieures en proposant un dispositif de support de chargeur perfectionné dans lequel les interfaces d'assemblage avec le chargeur sont rapportées et désormais horizontales et séparées du berceau.

Cette nouvelle configuration permet de positionner et de monter le support au plus près de la caisse du véhicule avant de poser le chargeur sur le berceau tout en ayant un accès aisé aux éléments d'assemblage entre le support et le chargeur.

Ce but est atteint, selon l'invention, au moyen d'un dispositif de support du chargeur de batterie pour son montage sous la caisse d'un véhicule automobile, ledit dispositif comprenant un berceau sur lequel repose un caisson renfermant ledit chargeur et au moins deux bras verticaux solidaires du berceau et assurant sa suspension sous la caisse, caractérisé en ce que le caisson porte au moins une patte en saillie assurant l'assemblage avec une entretoise en équerre venant, d'une part, en appui contre la paroi latérale dudit caisson et dont la face supérieure vient, d'autre part, se fixer sous la caisse parallèlement aux bras de liaison verticaux.

Selon une caractéristique avantageuse, la patte est destinée à venir en regard avec un orifice correspondant ménagé sur l'entretoise pour la pose d'organes destinés à leur assemblage mutuel.

Le cas échéant, cette patte est pourvue d'au moins un orifice destiné à venir en regard avec un orifice correspondant ménagé sur l'entretoise pour la pose de vis d'assemblage.

Selon une autre caractéristique avantageuse, les extrémités de l'entretoise sont pourvues d'orifices latéraux pour la pose d'élément de fixation sous la caisse.

De préférence, les orifices latéraux de cette entretoise sont situés de part et d'autre de l'orifice d'assemblage avec la patte du caisson.

Selon une variante de réalisation du dispositif de l'invention, les orifices latéraux sont ménagés au travers de bossages s'étendant dans un plan situé au-dessus de la face supérieure du caisson.

Selon une autre variante, l'entretoise est munie de pieds assurant la liaison avec le berceau.

Selon un mode de réalisation préférentiel du dispositif de l'invention, le caisson porte deux pattes horizontales parallèles.

De préférence, le caisson est fixé au berceau sur le bord inférieur de sa paroi latérale située du côté opposé à l'entretoise.

L'invention prévoit également que l'entretoise comporte au moins une cavité destinée à recevoir et à caler la patte d'assemblage du caisson.

Un autre objet de l'invention est un véhicule automobile équipé d'un dispositif de support de chargeur de batterie présentant les caractéristiques mentionnées ci-dessus.

Le dispositif de l'invention consiste donc à modifier la position des interfaces entre le berceau et le chargeur ce qui permet de rigidifier leur liaison, de renforcer l'ensemble et de garantir un montage fiable et stable dans le temps du chargeur sous la caisse, même en présence de vibrations ou de sollicitations importantes (chocs, ...).

Ainsi, le dispositif de l'invention permet de résoudre le problème mécanique de la faible endurance des solutions techniques antérieures tout en disposant le chargeur au plus près de la caisse et, en particulier, de la platine d'outillage mécanique, sans ajouter de matière et donc sans alourdir le véhicule.

L'invention permet ainsi avec la même mise en matière, voire même des épaisseurs de tôles moindres, d'avoir un ensemble chargeur / support chargeur plus rigide.

D'autres caractéristiques et avantages de l'invention ressortiront à la lecture de la description qui va suivre, en référence aux dessins annexés et détaillés ci-après.
[Fig. 1A] est une vue en perspective d'un mode de réalisation préférentiel du dispositif de support de chargeur selon l'invention.
[Fig. 1B] est une vue de côté du dispositif de la figure 1A.
[Fig. 1C] est une vue de dessus du dispositif des figures 1A et 1B.
[Fig. 2] est une vue en perspective d'un autre mode de réalisation du dispositif de support de chargeur selon l'invention.

Pour plus de clarté, les éléments identiques ou similaires sont repérés par des signes de référence identiques dans la description et sur les figures.

Naturellement, les modes de réalisation du dispositif de l'invention illustrés par les figures présentées ci-dessus et décrites ci-après, ne sont donnés qu'à titre d'exemples non limitatifs. Il est explicitement prévu que l'on puisse proposer et combiner entre eux différents modes pour en proposer d'autres.

L'invention concerne l'intégration du chargeur de batterie dans la structure d'un véhicule automobile et, plus précisément, le montage du support de ce chargeur sous la caisse du véhicule.

Le chargeur de batterie équipant les véhicules automobiles est un composant relativement lourd dont la masse représente une dizaine de kilos et qui est logé dans un support fixé sous la caisse du véhicule. Ce support comprend généralement un berceau sur lequel repose un caisson renfermant le chargeur et au moins deux bras verticaux solidaires de ce berceau destinés à assurer la liaison en suspension sous la caisse du véhicule.

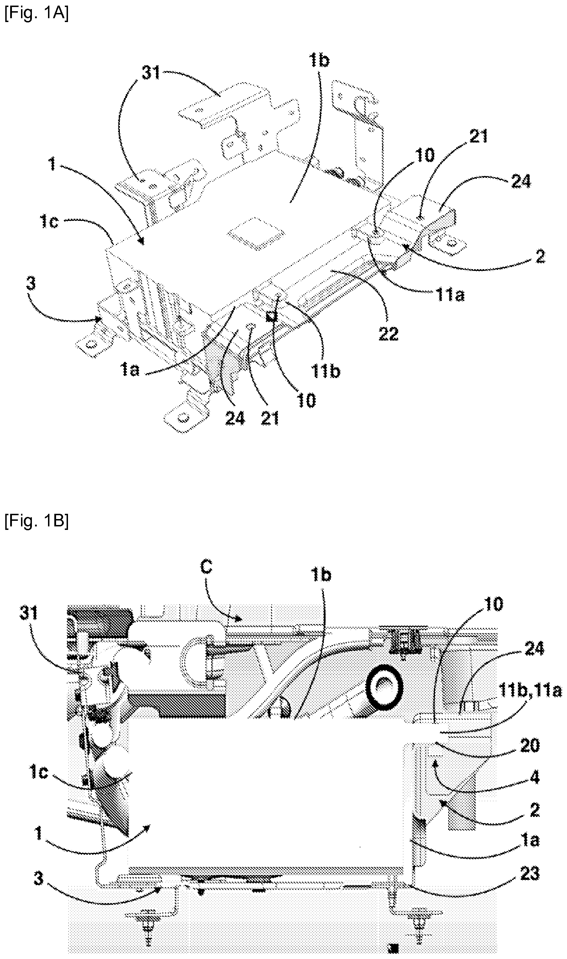

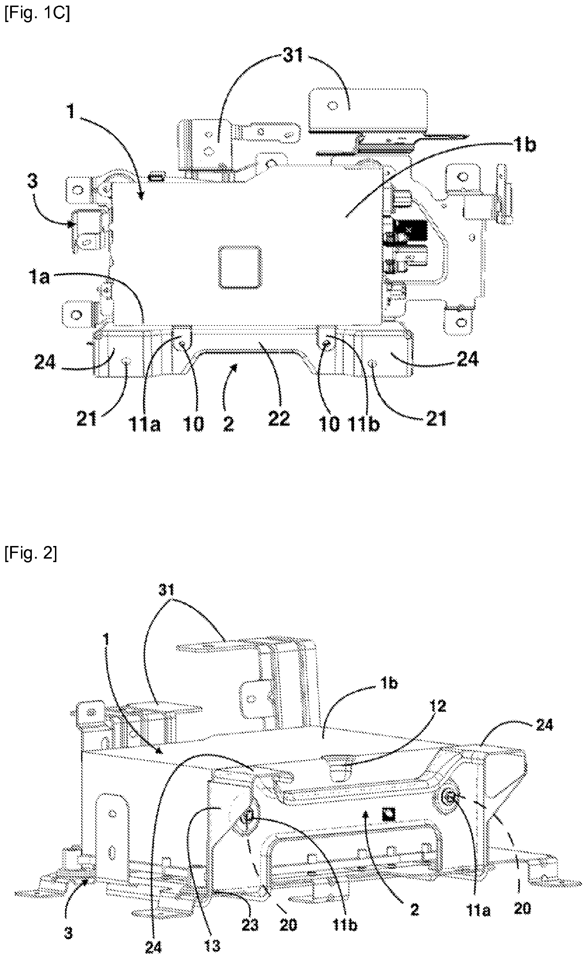

L'invention vise à rigidifier l'ensemble support/chargeur pour éviter les phénomènes préjudiciables de balancier du berceau. A cet effet, et comme illustré par les figures 1A, 1B et 1C, représentant un mode de réalisation préférentiel, l'invention prévoit que le caisson 1 du chargeur porte, dans sa partie supérieure, au moins une, et ici deux pattes parallèles 11a, 11b en saillie s'étendant dans un plan sensiblement horizontal. Ces pattes assurent l'assemblage avec une entretoise 2 en équerre qui vient, d'une part, en appui contre la paroi latérale 1a du caisson 1 et, d'autre part, se fixer, par sa face supérieure, sous la caisse C parallèlement aux deux bras verticaux 31 de liaison du berceau 3 avec la caisse C, comme illustré notamment par la figure 1B.

Les pattes 11a, 11b du caisson 1 sont pourvues chacune d'au moins un orifice 10 destiné à venir en regard avec un orifice 20 correspondant ménagé sur l'entretoise 2 pour la pose de vis 4 (figure 1B) destinées à l'assemblage vertical du caisson 1 avec l'entretoise 2. Les orifices 20 de l'entretoise 2 sont pratiqués dans le fond d'une ou plusieurs cavités 22 destinées à recevoir et à caler les pattes 11a, 11b.

Les extrémités de l'entretoise 2 sont, quant à elles, pourvues d'orifices latéraux 21 pour la pose d'élément de fixation (non représentés) sous la caisse C du véhicule.

De préférence, ces orifices latéraux 21 sont ménagés au travers de bossages 24 s'étendant dans un plan situé au-dessus de la face supérieure 1b du caisson 1 et sont situés de part et d'autre des orifices 20 destinés à l'assemblage avec les pattes 11a, 11b.

Dans le mode de réalisation de la figure 2, la fixation de l'entretoise 2 est effectuée horizontalement et non plus verticalement. A cet effet, les orifices 20 de l'entretoise sont réalisés au travers de sa paroi latérale et reçoivent les pattes 11a, 11b qui sont ici portées en vis-à-vis par la paroi latérale 1a du caisson 1. Ces pattes sont, par exemple, boulonnées au travers des orifices 20. Une butée 12 portée par le bord supérieur du caisson 1 assure le calage de l'entretoise 2 vers le haut. L'entretoise 2 peut alors être positionnée et assemblée sur le caisson 1 en étant calée grâce à des oreilles 13.

Le caisson 1 est fixé au berceau 3 sur le bord inférieur de sa paroi latérale 1c située du côté opposé à la face 1a contre laquelle l'entretoise 2 vient en appui tandis que l'entretoise 2 est muni de pieds 23 assurant la liaison avec le berceau 3 (figure 1B).

Le mode de fixation préconisé par l'invention permet de rapprocher l'ensemble constitué du berceau 3 et du caisson 1 de chargeur au plus près de la caisse C et d'assurer une stabilité satisfaisante même en présence de vibrations ou de chocs sur le véhicule.
En outre, le dispositif de support de l'invention permet d'effectuer un montage aisé du chargeur sous la caisse C du véhicule. Ce montage est effectué en déposant tout d'abord le caisson 1 contenant le chargeur sur le berceau 3, via un accès latéral situé à proximité de la platine d'outillage mécanique (POM). L'opération suivante consiste à positionner et à assembler l'entretoise 2 aux pattes 11a, 11b du caisson 1 en fermant ainsi l'accès latéral du berceau 3. Le montage final est complété par la pose verticale des vis au travers des orifices 20 de l'entretoise 2 jusque dans les taraudages (non représentés) prévus à cet effet sous la caisse C.

## Revendications

1. Dispositif de support du chargeur de batterie pour son montage sous la caisse (C) d'un véhicule automobile, ledit dispositif comprenant un berceau (3) sur lequel repose un caisson (1) renfermant ledit chargeur et au moins deux bras verticaux (31) solidaires du berceau et assurant sa suspension sous la caisse, **caractérisé en ce que** ledit caisson (1) porte au moins une patte (11a, 11b) en saillie assurant l'assemblage avec une entretoise (2) en équerre venant, d'une part, en appui contre la paroi latérale (1a) dudit caisson (1) et dont la face supérieure vient, d'autre part, se fixer sous la caisse (C) parallèlement aux bras de liaison verticaux (31).

2. Dispositif selon la revendication 1, **caractérisé en ce que** ladite patte (11a, 11b) est destinée à venir en regard avec un orifice (20) correspondant ménagé sur ladite entretoise (2) pour la pose d'organes destinés à leur assemblage mutuel.

3. Dispositif selon l'une des revendications précédentes, **caractérisé en ce que** les extrémités de ladite entretoise (2) sont pourvues d'orifices latéraux (21) pour la pose d'éléments de fixation sous la caisse (C).

4. Dispositif selon les revendications 2 et 3, **caractérisé en ce que** les orifices latéraux (21) de ladite entretoise (2) sont situés de part et d'autre de l'orifice (20) d'assemblage avec la patte (11a, 11b) du caisson (1).

5. Dispositif selon la revendication précédente, **caractérisé en ce que** lesdits orifices latéraux (21) sont ménagés au travers de bossages (24) s'étendant dans un plan situé au-dessus de la face supérieure (1b) du caisson (1).

6. Dispositif selon l'une des revendications précédentes, **caractérisé en ce que** ladite entretoise (2) est **munie** de pieds (23) assurant la liaison avec le berceau (3).

7. Dispositif selon l'une des revendications précédentes, **caractérisé en ce que** le caisson (1) porte deux pattes (11a, 11b) horizontales et parallèles.

8. Dispositif selon l'une des revendications précédentes, **caractérisé en ce que** ledit caisson (1) est fixé au berceau (3) sur le bord inférieur de sa paroi latérale (1c) située du côté opposé à ladite entretoise (2).

9. Dispositif selon l'une des revendications précédentes, **caractérisé en ce que** ladite entretoise (2) comporte au moins une cavité (22) destinée à recevoir et à caler ladite patte (11a, 11b) d'assemblage du caisson (1).

10. Véhicule automobile équipé d'un dispositif de support de chargeur de batterie selon l'une des revendications précédentes.

## Patentansprüche

1. Vorrichtung zum Tragen des Batterieladegeräts für dessen Montage unter der Karosserie (C) eines Kraftfahrzeugs, wobei die Vorrichtung eine Halterung (3) umfasst, auf der ein Kasten (1) ruht, der das Ladegerät umschließt, und mindestens zwei vertikale Arme (31). fest mit der Wiege verbunden und gewährleistet deren Aufhängung unter dem Körper, **dadurch gekennzeichnet, dass** der Kasten (1) mindestens eine hervorstehende Lasche (11a, 11b) trägt, die die Verbindung mit einem Abstandshalter (2) im rechten Winkel gewährleistet, der einerseits aufliegt an der Seitenwand (1a) des Kastens (1) anliegt und dessen Oberseite andererseits parallel zu den vertikalen Verbindungsarmen (31) unter dem Kasten (C) befestigt ist.

2. Vorrichtung nach Anspruch 1, **dadurch gekennzeichnet, dass** die Lasche (11a, 11b) dazu bestimmt ist, mit einer entsprechenden Öffnung (20) in Kontakt zu kommen, die an dem Abstandshalter (2) für die Installation von Elementen vorgesehen ist, die für deren gegenseitige Montage vorgesehen sind.

3. Vorrichtung nach einem der vorhergehenden Ansprüche, **dadurch gekennzeichnet, dass** die Enden des Abstandshalters (2) mit seitlichen Löchern (21) für den Einbau von Befestigungselementen unter der Karosserie (C) versehen sind.

4. Vorrichtung nach den Ansprüchen 2 und 3, **dadurch gekennzeichnet, dass** die seitlichen Öffnungen (21) des Abstandshalters (2) auf beiden Seiten der Öffnung (20) zur Montage mit der Lasche (11a, 11b) des Kastens angeordnet sind ( 1).

5. Vorrichtung nach dem vorhergehenden Anspruch, **dadurch gekennzeichnet, dass** die seitlichen Öffnungen (21) durch Vorsprünge (24) bereitgestellt werden, die sich in einer Ebene über der Oberseite (1b) des Kastens (1) erstrecken.

6. Vorrichtung nach einem der vorhergehenden Ansprüche, **dadurch gekennzeichnet, dass** der Abstandshalter (2) mit Füßen (23) versehen ist, die die Verbindung mit der Wiege (3) gewährleisten.

7. Vorrichtung nach einem der vorhergehenden Ansprüche, **dadurch gekennzeichnet, dass** der Kasten (1) zwei horizontale und parallele Beine (11a, 11b) trägt.

8. Vorrichtung nach einem der vorhergehenden Ansprüche, **dadurch gekennzeichnet, dass** der Kasten (1) an der Unterkante seiner Seitenwand (1c), die sich auf der dem Abstandshalter (2) gegenüberliegenden Seite befindet, am Gestell (3) befestigt ist.

9. Vorrichtung nach einem der vorhergehenden Ansprüche, **dadurch gekennzeichnet, dass** der Abstandshalter (2) mindestens einen Hohlraum (22) aufweist, der dazu bestimmt ist, die Lasche (11a, 11b) aufzunehmen und zu verkeilen, um den Kasten (1) zusammenzubauen.

10. Kraftfahrzeug, ausgestattet mit einer Batterieladegerät-Unterstützungsvorrichtung nach einem der vorhergehenden Ansprüche.

## Claims

1. Device for supporting the battery charger for its mounting under the body (C) of a motor vehicle, said device comprising a cradle (3) on which rests a box (1) containing said charger and at least two vertical arms (31) integral with the cradle and ensuring its suspension under the body, **characterized in that** said box (1) carries at least one protruding tab (11a, 11b) ensuring assembly with a right-angled spacer (2) coming, on the one hand, to bear against the side wall (1a) of said box (1) and the upper face of which comes, on the other hand, to be fixed under the body (C) parallel to the vertical connecting arms (31).

2. Device according to claim 1, **characterized in that** said tab (11a, 11b) is intended to come into view with a corresponding orifice (20) provided on said spacer (2) for the installation of members intended for their mutual assembly.

3. Device according to one of the preceding claims, **characterized in that** the ends of said spacer (2) are provided with lateral orifices (21) for installing fixing elements under the body (C).

4. Device according to claims 2 and 3, **characterized in that** the lateral orifices (21) of said spacer (2) are located on either side of the orifice (20) for assembly with the tab (11a, 11b) of the box (1).

5. Device according to the preceding claim, **characterized in that** said lateral orifices (21) are formed through bosses (24) extending in a plane located above the upper face (1b) of the box (1).

6. Device according to one of the preceding claims, **characterized in that** said spacer (2) is provided with feet (23) ensuring the connection with the cradle (3).

7. Device according to one of the preceding claims, **characterized in that** the box (1) carries two horizontal and parallel legs (11a, 11b).

8. Device according to one of the preceding claims, **characterized in that** said box (1) is fixed to the cradle (3) on the lower edge of its side wall (1c) located on the side opposite said spacer (2).

9. Device according to one of the preceding claims, **characterized in that** said spacer (2) comprises at least one cavity (22) intended to receive and wedge said leg (11a, 11b) for assembling the box (1).

10. Motor vehicle equipped with a battery charger support device according to one of the preceding claims.
